**Europäisches Patentamt**

**European Patent Office**

**Office européen des brevets**

(19)

(11) **EP 0 993 712 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(21) Anmeldenummer: **98936194.4**

(22) Anmeldetag: **17.06.1998**

(51) Int Cl.[7]: **H04L 1/12**, H04L 1/18

(86) Internationale Anmeldenummer:
**PCT/DE1998/001650**

(87) Internationale Veröffentlichungsnummer:
**WO 1999/001959 (14.01.1999 Gazette 1999/02)**

(54) **VERFAHREN UND ANORDNUNG ZUR CODIERUNG DIGITALER DATEN**

METHOD AND SYSTEM FOR CODING DIGITAL DATA

PROCEDE ET DISPOSITIF POUR LE CODAGE DE DONNEES NUMERIQUES

(84) Benannte Vertragsstaaten:
**DE FR GB IT NL SE**

(30) Priorität: **03.07.1997 DE 19728469**

(43) Veröffentlichungstag der Anmeldung:
**19.04.2000 Patentblatt 2000/16**

(73) Patentinhaber: **SIEMENS AKTIENGESELLSCHAFT**
**80333 München (DE)**

(72) Erfinder:
• **HUTH, Hans-Peter**
**D-80638 München (DE)**
• **ENGMANN, Steffen**
**D-76829 Landau (DE)**

(56) Entgegenhaltungen:
**EP-A- 0 743 764       DE-A- 19 543 280**
**US-A- 4 701 923       US-A- 5 526 399**

EP 0 993 712 B1

**Beschreibung**

Die Erfindung betrifft die Codierung und Übertragung digitaler Daten, die in Nutzdatensegmente segmentiert sind.

US-A-5 526 399 offenbart, ein Verfahren zur Fehlerkorrektur in einem Mobilfunknetz, das auf Automatic Repeat Request (ARP) oder Vorwärtsfehlerkorrektur (FER) beruht, in Abhängigkeit von der Datenübertragungsrate, auszuwählen. Bei der paketorientierten Übertragung von Daten über Kommunikationsnetze werden zu übertragende Nutzdaten von einer ersten Anordnung zu einer zweiten Anordnung übertragen. Ziel eines jeden Datenübertragungssystems muss es sein, die von der Übertragung zuverlässig zu gewährleisten. Die Übertragung erfolgt üblicherweise unter Verwendung hierarchisch angeordneter, unterschiedlicher Kommunikationsdienste. Jeder Kommunikationsdienst wird derart erbracht, dass keine Kenntnisse von Abläufen, die von direkt benachbarten Kommunikationsdiensten erbracht werden, den einzelnen Kommunikationsdiensten bekannt sind. Üblicherweise wird einer solchen hierarchischen Struktur das bekannte OSI-Schichtenmodell (Open Systems Interconnection) zugrunde gelegt.

Oftmals wird der Ansatz des OSI-Schichtmodells auch aufgeweicht, um die Effizienz des Datenübertragungssystems zu erhöhen. In diesem Fall greifen einzelne Instanzen (Schichten) des Datenübertragungssystems auf aktuelle Zustände und Anforderungen zurück, arbeiten also "schichtenübergreifend".

Insbesondere Multimedia-Anwendungen stellen an heutige Datenübertragungssysteme hohe Ansprüche. Die Systeme müssen flexibel sein und sowohl auf Änderungen der Übertragungsbedingungen sowie auf verschiedene Anforderungen der Anwendungen eingehen können.

Dies ist v.a. darauf zurückzuführen, dass bei Multimedia-Applikationen unterschiedliche Datenströme mit unterschiedlichen Anforderungen hinsichtlich verschiedener Aspekte, z.B. an die Laufzeitverzögerung oder an die Fehlererkennung/Fehlerkorrektur der übertragenen Daten stellen.

Digitale Datenströme in diesem Sinne sind beispielsweise zu übertragende Videodaten, Sprache oder auch textuelle Information, die z.B. gemäß dem ASCII-Format codiert ist.

Es sind zur Gewährleistung von Fehlererkennung bzw. Fehlerkorrektur verschiedene Fehlerkorrekturmechanismen bekannt:

- Mehrfache Übertragung der Datensegmente;
  Bei der Mehrfachübertragung der Datensegmente werden zumindest Teile der Datensegmente mehrfach von einer ersten Anordnung zur zweiten Anordnung übertragen, wodurch Redundanz bei der Übertragung generiert wird, womit die Wahrscheinlichkeit einer korrekten Übertragung der Nutzdaten erhöht wird.

- Automatic Repeat Request (ARQ)-Verfahren;
  Auch bei den ARQ-Verfahren wird die Fehlerfreiheit durch Übertragungswiederholungen der Datensegmente gewährleistet. Bei den ARQ-Verfahren wird in der die Datensegmente empfangenden zweiten Anordnung eine Fehlererkennung für die Datensegmente durchgeführt und unter Verwendung von Empfangsbestätigungen eventuell bei fehlerhafter Übertragung weitere Redundanz zu den Datensegmenten angefordert. Die Anzahl der erforderlichen Übertragungswiederholungen ist nicht vorhersagbar, da die Datensegmente wiederholt zerstört werden können.

- Vorwärts-Fehlerkorrektur-Verfahren (Forward Error Correction-Verfahren, FEC-Verfahren);
  Mit FEC-Verfahren wird die Fehlerrate durch Hinzufügen redundanter Daten zu den Datensegmenten verringert. Die für die Übertragung der Nutzdatensegmente erforderliche Bandbreite wird nur geringfügig bis mittelmäßig erhöht. Ohne die Verwendung zusätzlicher Empfangsbestätigungen und Übertragungswiederholung kann jedoch eine vollständige Fehlerfreiheit nicht erreicht werden.

- Aus diesem Grund wird oftmals ein hybrider Mechanismus aus ARQ-Verfahren und FEC-Verfahren eingesetzt.

Eine Übersicht über die oben beschriebenen Fehlerkorrekturmechanismen ist in [1] zu finden.

Bei heutigen Verfahren werden alle zu übertragenden Daten bei der Übertragung hinsichtlich der Fehlererkennung bzw. Fehlerkorrektur gleich behandelt.

So ist aus [2] das in der OSI-Vermittlungsschicht angeordnete High-Level-Data-Link-Control-Protocol (HDLC-Protokoll) bekannt. Das HDLC verwendet ein ARQ-Verfahren (Go-Back-N-Protocol oder Selected-Repeat-Protocol). Dies bedeutet, daß schon in der Vermittlungsschicht als fehlerhaft erkannte Daten nochmals angefordert werden, was zu Verzögerungen führt, auf die die höher liegende OSI-Transportschicht keinerlei Einfluß hat. Dir Transportschicht kann beispielsweise mittels des Transport-Control-Protocol (TCP) realisiert werden, welches ebenfalls einen ARQ-Mechanismus umfaßt. Werden in der Transportschicht Fehler erkannt, die beispielsweise auf Pufferüberläufen oder Time-Outs beruhen, fordert TCP das komplette Datensegment noch einmal an. Die in der Vermittlungsschicht vorgenommenen Übertragungswiederholungen im Rahmen des HDLC waren somit umsonst. Dies zeigt beispielhaft die Problematik, die bei bekannten Verfahren vorhanden ist.

Aus [3] ist das sogenannte Resource-Reservation-Protocol (RSVP) bekannt.

Es ist jeweils nur ein spezifischer Fehlererkennungsmechanismus für eine Applikation vorgesehen. Dies bedeutet, daß unterschiedliche Datenströme unabhängig von ihren Qualitätsanforderungen, den gleichen Fehlerkorrekturmechanismus durchlaufen, der dadurch fehlangepaßt und in den meisten Fällen überdimensioniert ist und beispielsweise zu nicht tolerierbaren unnötigen Verzögerungen führen kann.

Somit liegt der Erfindung das Problem zugrunde, Verfahren und Anordnungen zur Codierung und Übertragung digitaler Daten anzugeben, mit denen den oben beschriebenen unterschiedlichen Anforderungen an ein Datenübertragungssystem Rechnung getragen wird.

Das Problem wird durch das Verfahren gemäß Patentanspruch 1, durch das Verfahren gemäß Patentanspruch 2, durch das Verfahren gemäß Patentanspruch 3, durch die Anordnung gemäß Patentanspruch 13, durch die Anordnung gemäß Patentanspruch 14 sowie die Anordnung gemäß Patentanspruch 15 gelöst.

Bei den Verfahren werden die digitalen Daten derart codiert, daß die Daten in Nutzdatensegmente segmentiert sind. Mindestens ein Zustandsparameter und/oder mindestens ein Verbindungsparameter wird ermittelt und unter Verwendung des Zustandsparameters und/oder des Verbindungsparamters wird für jeden Fehlerkorrekturmechanismus aus einer vorgegebener Menge Fehlerkorrekturmechanismen mindestens ein Auswahlparameter ermittelt. Mit dem Auswahlparameter wird eine Eigenschaft des jeweiligen Fehlerkorrekturmechanismus bezüglich des ermittelten Zustandsparameters und/oder Verbindungsparameters beschrieben. Es wird ein Fehlerkorrekturmechanismus ausgewählt. Die Nutzdatensegmente werden unter Verwendung des ausgewählten Fehlerkorrekturmechanismus codiert.

Die Anordnungen dienen zur Codierung der digitalen Daten, die in Nutzdatensegmente segmentiert sind. Dies erfolgt unter Verwendung eines ausgewählten Fehlerkorrekturmechanismus aus einer vorgebbaren Mengen von Fehlerkorrekturmechanismen. Die Anordnung umfaßt eine Ermittlungseinheit zur Ermittlung mindestens eines Zustandsparameters und/oder mindestens eines Verbindungsparameters. Für jeden Fehlerkorrekturmechanismus der Menge von Fehlerkorrekturmechanismen ist ein Korrekturmodul vorgesehen, mit dem unter Verwendung des Zustandsparameters und/oder des Verbindungsparameters jeweils mindestens ein Auswahlparameter ermittelt wird. Mit dem Auswahlparameter wird eine Eigenschaft des jeweiligen Fehlerkorrekturmechanismus bezüglich des ermittelten Zustandsparameters und/oder Verbindungsparameters beschrieben. Ferner ist eine Mechanismusauswahleinheit vorgesehen, mit der ein Fehlerkorrekturmechanismus ausgewählt wird. Weiterhin ist eine Codiereinheit vorgesehen zur Codierung der Nutzdatensegmente unter Verwendung des ausgewählten Fehlerkorrekturmechanismus zu Datenpakten.

Sowohl durch die Verfahren als auch durch die Anordnungen wird es möglich, unterschiedliche Anforderungen an die Datenübertragung sowohl hinsichtlich der erforderlichen Bandbreite sowie benötigter Fehlerkorrektur möglich. Es wird somit gewährleistet, daß für jede Anforderung das effizienteste Fehlerkorrekturverfahren verwendet wird. Da es auch möglich ist, Verbindungsparameter bei der Auswahl des Fehlerkorrekturmechanismus zu berücksichtigen, wird es möglich, schnell auf Änderungen der Qualität der Übertragungsstrecke zu reagieren.

Anschaulich kann die Erfindung darin gesehen werden, daß aus einer Menge vorgegebener Fehlerkorrekturmechanismen unter Berücksichtigung vorgegebener Rahmenbedingungen (Qualitätsanforderung, Zustand des Übertragungssystems) der unter den Rahmenbedingungen "optimale" Fehlerkorrekturmechanismus ausgewählt wird und die Daten unter Verwendung des Fehlerkorrekturmechanismus codiert und übertragen werden.

Vorteilhafte Weiterbildungen der Erfindung ergeben sich aus den abhängigen Ansprüchen.

In einer Weiterbildung sowohl des Verfahren als auch der Anordnung ist es vorteilhaft, daß der Auswahlparameter gewichtet wird und der Fehlerkorrekturmechanismus ausgewählt wird; dessen gewichteter Auswahlparameter hinsichtlich eines vorgebbaren Auswahlkriteriums optimal ist. Durch diese Weiterbildung wird eine noch effizientere Auswahl des am jeweils geeignetsten Fehlerkorrekturmechanismus möglich.

Es ist ferner in einer Weiterbildung vorteilhaft, sowohl das Verfahren als auch die Anordnung im Rahmen einer drahtlosen Übertragung digitaler Daten einzusetzen, beispielsweise im Bereich des Mobilfunks (z.B. Datenübertragung gemäß GSM-Standard).

Ein bevorzugtes Ausführungsbeispiel der Erfindung wird im weiteren anhand von Figuren näher erläutert.

Es zeigen

Fig. 1    eine Skizze eines Datenübertragungssystems (Kommunikationssystem) mit einer ersten Anordnung, einer Übertragungseinheit sowie einer zweiten Anordnung;

Fig. 2    eine Skizze, in der funktionale Einheiten eines adaptiven Fehlerkorrekturmoduls dargestellt sind;

Fig. 3    eine Skizze, in der ein im weiteren beschriebener Abfragemechanismus dargestellt ist;

Fig. 4    ein Ablaufdiagramm, in dem einzelne Verfahrensschritte des Ausführungsbeispiels dargestellt sind.

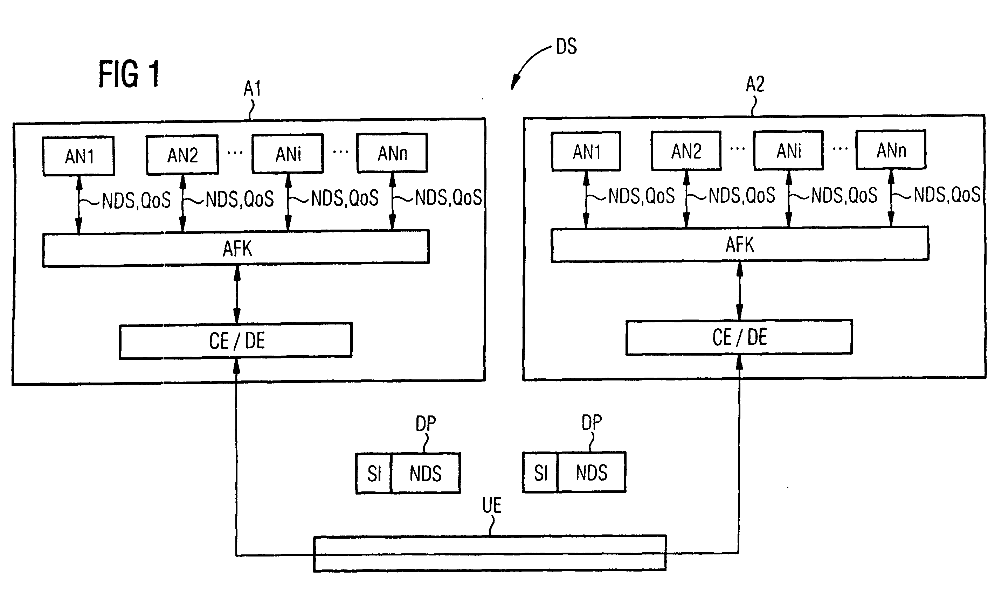

Fig. 1 zeigt ein Datenübertragungssystem DS (Kommunikationssystem) mit einer ersten Anordnung A1, einer zweiten Anordnung A2 sowie einer Übertragungseinheit UE.

Die erste Anordnung A1 und die zweite Anordnung A2 sind über die Übertragungseinheit UE miteinander derart verbunden, daß Datenpakete DP monodirektional oder bidirektional ausgetauscht werden können.

Unter Datenpaketen DP sind im weiteren Nutzdatensegmente NDS mit den Nutzdatensegmenten NDS jeweils zugeordneter Steuerungsinformation SI zu verstehen.

Fig. 1 zeigt in den Anordnungen A1, A2 jeweils symbolische Anwendungen ANi (i = 1, ..., n), die Übertragungsanforderungen von Nutzdaten, die von der jeweiligen Anwendung ANi einem adaptiven Fehlerkorrekturmodul AFK zugeführt werden.

Nutzdaten sind in diesem Zusammenhang beispielsweise Videodaten, Sprachinformation oder auch textuelle Information, die beispielsweise gemäß dem ASCII-Format codiert wird.

Unterschiedliche Arten von Nutzdaten stellen unterschiedliche Anforderungen an deren Übertragung.

Aus diesem Grund werden von der Anwendung ANi dem adaptiven Fehlerkorrekturmodul AFK zusätzlich Qualitätsanforderungsparameter QoS (Quality-of-Service-Parameter, QoS-Parameter) zugeführt.

Mit den Qualitätsanforderungsparametern QoS fordert die Anwendung ANi jeweils eine für eine Verbindung erforderliche Qualität an.

Mit einer Verbindung wird ein digitaler Datenstrom bezeichnet, der zwischen der ersten Anordnung A1 und der zweiten Anordnung A2 übertragen wird und eine über einen vorangegangenen Verbindungsaufbau vorinitialisierte Strecke, welche über die Übertragungseinheit UE symbolisiert wird, benötigt. Eine Verbindung in diesem Sinne ist z. B. eine TCP/IP-Kommunikationsverbindung. Ein Datenfluß des IP-Protokolls (Internet Protocol) gilt dann als Verbindung, wenn der Datenstrom eindeutig identifizierbar ist und in einer Initialisierungsphase Ressourcen des Übertragungssystems zugeordnet bekommt. Hierzu kann das Resource-Reservation-Protocol (RSVP) verwendet werden (vgl. [3]).

Von der Anwendung ANi werden dem adaptiven Fehlerkorrekturmodul AFK folgende Qualitätsanforderungsparameter QoS zugeführt:

- Gewünschte Bandbreite $b_A$;
  die gewünschte Bandbreite $b_A$ definiert quantitativ das zeitabhängige Datenaufkommen von der Anwendung ANi. Die Einheit zur Beschreibung der gewünschten Bandbreite $b_A$ ist [bit/sec].

- Maximale Zeitverzögerung $t_A$;
  die maximale Zeitverzögerung $t_A$ dient insbesondere bei echtzeitsensitiven Anwendungen ANi zur Definition der maximal verträglichen Laufzeit der Nutzdatensegmente NDS.

- Maximal für die Anwendung ANi erlaubte Bitfehlerrate $e_A$.

- Eine Längenangabe der zu übertragenden Nutzdaten len in [bit];
  mit der Längenangabe der zu übertragenden Nutzdaten len wird es möglich, eine Laufzeitabschätzung durchzuführen. Die Längenangabe der zu übertragenden Nutzdaten len bezeichnet die maximlae Länge der von der Anwendung ANi zu übertragenden Nuztdaten.

Die zu übertragenden Nutzdaten werden in Nutzdatensegmente NDS gruppiert und ebenso dem adaptiven Fehlerkorrekturmodul AFK zugeführt.

In dem adaptiven Fehlerkorrekturmodul AFK wird eine hinsichtlich der Qualitätsanforderungen sowie mindestens einem aktuellen Zustand der Übertragungsverbindung beschreibenden Parameter der unter den jeweiligen Bedingungen effektivste Fehlerkorrekturmechanismus ausgewählt und das Nutzdatensegment NDS wird unter Verwendung des ausgewählten Fehlerkorrekturmechanismus bearbeitet und einer Codierungeinheit CE zugeführt.

In der Codierungseinheit CE werden die Nutzdatensegmente NDS zu Datenpaketen DP codiert und der Übertragungseinheit UE zugeführt.

Durch die Übertragungseinheit UE werden die Datenpakete DP von der ersten Anordnung A1 zu der zweiten Anordnung A2 übertragen.

In der zweiten Anordnung A2 werden die Datenpakete DP empfangen und in einer Decodierungseinheit DE decodiert. In dem adaptiven Fehlerkorrekturmodul AFK wird die entsprechende Fehlerkorrektur bzw. Fehlererkennung gemäß dem ausgewählten Fehlerkorrekturmechanismus durchgeführt und die decodierten Nutzdatensegmente NDS werden der jeweiligen korrespondierenden Anwendung ANi der zweiten Anordnung A2 zugeführt.

Eine mögliche bidirektionale Kommunikation zwischen der ersten Anordnung A1 und der zweiten Anordnung A2 ist durch einen Doppelpfeil zwischen den Anordnungen A1 und A2 symbolisch dargestellt.

Das adaptive Fehlerkorrekturmodul AFK ist logisch direkt über der Codierungeinheit CE bzw. Decodierungseinheit DE angeordnet und soweit unterhalb der Anwendung ANi wie es erforderlich ist, daß noch immer die Qualitätsanforderungsparameter QoS der Anwendung ANi dem adaptiven Fehlerkorrekturmodul AFK mitübergeben werden können.

Somit bietet es sich an, das adaptive Fehlerkorrekturmodul AFK in die Vermittlungsschicht (Link-Layer) einzubetten.

Es wird vorausgesetzt, daß die Einheit umfassend die Codierungseinheit CE, die Decodierungseinheit DE sowie die Übertragungseinheit UE derart ausgestaltet ist, daß mehrere logische und physikalische Übertragungskanäle mit synchroner Einteilung verwendet werden.

In diesem Zusammenhang wird das Time Division Multiple Access-Verfahren (TDMA-Verfahren) eingesetzt.

Bei dem TDMA-Verfahren wird die Übertragungszeit in mehrere Zeitschlitze aufgeteilt, von denen ein Teil der Zeitschlitze jeweils für die Übertragung von Daten eines bestimmten Kanals zur Verfügung gestellt wird. Im folgenden wird davon ausgegangen, daß für die Übertragung nur zwei Teilnehmer vorgesehen sind, über dieses Verfahren aber mehrere Anwendungen ANi Datenpakete DP übertragen, die konkurrierend auf die Zeitschlitze zugreifen. Die Übertragung der einzelnen Datenströme erfolgt in logischen Kanälen.

Die sich periodisch wiederholenden Einheiten, innerhalb derer sich die logischen Kanäle und somit auch die Datenpakete DP befinden, werden als Rahmen R bezeichnet.

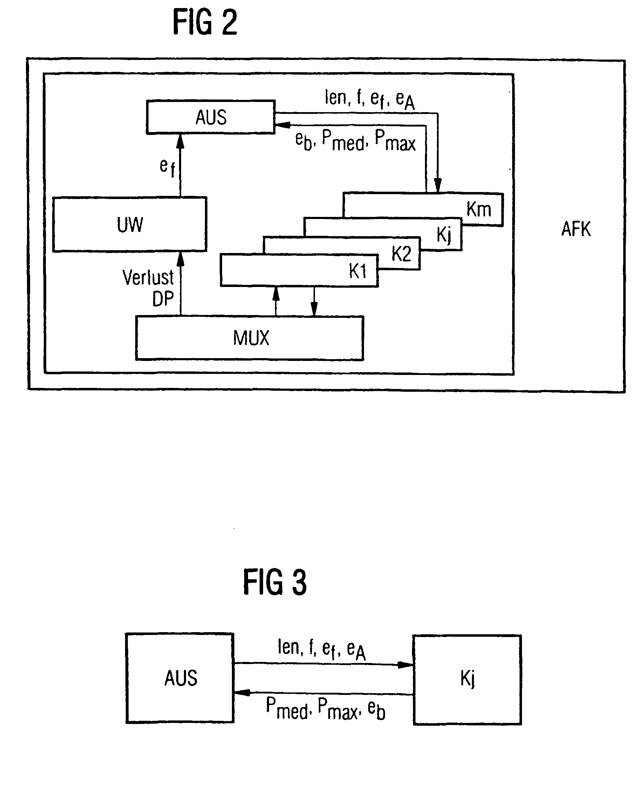

Figur 2 zeigt das adaptive Fehlerkorrekturmodul AFK in seinen symbolisch dargestellten funktionalen Einheiten.

Es ist eine Überwachungseinheit UW vorgesehen, mit der der jeweils aktuelle Zustand des Datenübertragungssystems DS ermittelt wird. Hierzu werden die von der jeweiligen Anordnung A1, A2 jeweils versandten und empfangenen Datenmengen, d.h. die Anzahl versandter und empfangener Datenpakete DP aufgezeichnet und registriert. Jede Anordnung A1, A2 signalisiert der jeweils anderen Anordnung A1, A2 die Anzahl der versandten Datenpakete DP. Die Anordnungen A1, A2 vergleichen diesen signalisierten Wert mit der Anzahl der bei ihr korrekt empfangenen Datenpakete DP. Auf diese Weise lassen sich Verlust und Zerstörungen in beide Übertragungsrichtungen auf einfache Weise ermitteln.

Aus diesen Werten werden die Zustandsänderungen der Übertragungseinheit UE kurz-, mittel- und langfristig aufgezeichnet und gespeichert, wodurch eine detaillierte Überwachung der Übertragungseinheit UE möglich wird. Da diese Informationen für beide Kommunikationspartner von Bedeutung sind, werden sie über die Übertragungseinheit UE als Datenpakete DP übertragen. Sie enthalten als Information sowohl Bitfehler als auch Datenpaketverluste. Da auch diese Datenpakete DP wie normale Nutzdatenpakete dem Einfluß der Übertragungseinheit UE ausgeliefert sind, wird ebenfalls der Verlust dieser Datenpakete DP überwacht und übermittelt. Die Messung und Übertragung erfolgt in äquidistanten Zeitabständen, um auch bei Verlusten dieser Datenpakete DP einen zuverlässigen Zustandsbericht zu gewährleisten, aber nicht zu viel Bandbreite für diese Überwachung zu benötigen.

Als Ergebnis der Überwachung übermittelt die Überwachungseinheit UW eine Datenpaketverlustrate $e_f$ [$\frac{1}{\text{Datenpaket}}$] einer Me-chanismusauswahleinheit AUS.

Der Mechanismusauswahleinheit AUS werden ferner die Qualitätsanforderungsparameter QoS zugeführt. Mit der Mechanismusauswahleinheit AUS wird die für das jeweilige Nutzdatensegment NDS optimierte Zuordnung Nutzdatensegment NDS / Fehlerkorrekturmechanismus bestimmt, dynamisch überwacht und gegebenenfalls aktualisiert.

Dies erfolgt dadurch, daß von der Mechanismusauswahleinheit AUS einzelnen Korrekturmodulen Kj (j = 1, ..., m) jeweils folgende Größen zugeführt werden:

- Längenangabe der zu übertragenden Nutzdaten len;
- eine Längenangabe eines Zeitschlitzes f;
- die Datenpaketverlustrate $e_f$;
- die maximal erlaubte Bitfehlerrate $e_A$ (vgl. Figur 3).

Ein Korrekturmodul Kj ist jeweils vorgesehen für jeden vorgegebenen Fehlerkorrekturmechanismus aus einer Menge vorgebbarer Fehlerkorrekturmechanismen, die in dem Datenübertragungssystem DS insgesamt vorgesehen sind.

Die einzelnen Fehlerkorrekturmechanismen werden im weiteren näher erläutert.

Jedes Korrekturmodul Kj ermittelt mindestens einen Auswahlparameter, jeweils abhängig von dem jeweiligen Fehlerkorrekturmechanismus. Die Auswahlparameter sind in diesem Ausführungsbeispiel:

- eine mittlere Anzahl $p_{med}$ von Datenpaketen DP, die für die Übertragung der gesamten Nutzdatensegmente NDS der jeweiligen Anwendung ANi erforderlich ist;
- eine maximale Anzahl $p_{max}$;
- eine bei Verwendung des jeweiligen Fehlerkorrekturmechanismus resultierende Bitfehlerrate $e_b$.

Von der Mechanismusauswahleinheit AUS wird der hinsichtlich der Rahmenbedingungen optimale Fehlerkorrekturmechanismus ausgewählt und die Nutzdatensegmente NDS einer Anwendung ANi über einen Multiplexer/Demultiplexer MUX der Codierungseinheit CE bzw. Decodierungseinheit DE zugeführt.

Sind die Qualitätsanforderungsparameter QoS als unbedingt einzuhalten anzusehen, so kann die Übertragung der Nutzdatensegmente NDS der Anwendung ANi nur angeboten werden, wenn folgende Bedingungen erfüllt sind:

$$e_{ges} = e_b \leq e_A$$

(Gesamtbitfehlerrate ≤ angeforderter max. Bitfehlerrate)

$$b_{ges} = \frac{len \cdot c}{p_{med} \cdot t_f} \geq b_A$$

(Bandbreite ≥ angeforderter Bandbreite)

$$t_{ges} = \frac{p_{max} \cdot t_f}{c} \leq t_A$$

(Gesamtverzögerung ≤ geforderter max. Verzögerung)

Bei Anwendungen ANi, die eine gewisse Varianz in Bezug auf die Qualitätsanforderungsparameter QoS zulassen, wird durch eine Anwendung ANi den Qualitätsanforderungsparametern QoS Gewichtungen zugeordnet und dem adaptiven Fehlerkorrekturmodul AFK mitgeteilt, ob beispielsweise mehr Wert auf Echtzeitverhalten oder auf Fehlerfreiheit bei der Übertragung gelegt wird. Dadurch werden sowohl Auswahlverfahren für die Fehlerkorrekturmechanismen flexibler gestaltet, als auch die Möglichkeit gegeben, auf einzelne Kriterien stärker zu achten, z.B. für den Fall, daß bei einem System Bandbreiteneinsparung aus Kostengründen der wichtigste Faktor sein sollte.

Dennoch muß jeweils das Datenübertragungssystem DS feststellen, ob der angeforderte Übertragungsdienst angeboten werden kann.

Wurden Anforderungen und durch die Fehlerkorrekturmechanismen erbringbare Qualität verglichen, so können drei Fälle auftreten:

1. Die Mechanismusauswahleinheit AUS findet genau einen passenden Fehlerkorrekturmechanismus.

2. Es gibt keinen Fehlerkorrekturmechanismus, der alle angeforderten Qualitätsanforderungen zu 100% erfüllen kann.

3. Mehrere Fehlerkorrekturmechanismen erfüllen die gewünschten Bedingungen.

Tritt der erste Fall ein, so wird der entsprechende Fehlerkorrekturmechanismus ausgewählt und im weiteren Verfahren für die Anwendung ANi verwendet.

Bei dem zweiten Fall müssen entweder Abstriche von der Anwendung ANi hinsichtlich der Qualitätsanforderungen gemacht werden oder der Dienst muß abgelehnt werden.

Liegt der dritte Fall vor, so wird derjenige Korrekturmechanismus ausgewählt, der im Mittel als am günstigsten erscheint und die wenigste Bandbreite benötigt, ein Kriterium, daß insbesondere im Mobilfunk zu den wichtigsten gehört.

Als Gewichtungsmöglichkeit der einzelnen Parameter werden folgende drei Kategorien verwendet:

- Must
  Diese Dienstqualität muß erbracht werden.
- Best effort
  Dieser Qualitätsanforderungsparameter QoS ist nicht zwingend, die bestmögliche Erfüllung soll erbracht werden.
- other
  Sonstiger Wert dazwischen, mit dem die verschiedenen Fehlerkorrekturmechanismen numerisch gegeneinander ausgewertet werden können.

Zur rechnerischen, im weiteren detailliert beschriebenen Auswertung wird im folgenden "must" der Wert 1 zugeordnet, "best effort" der Wert 0 und 0 < "other" < 1 definiert.

Es werden für die Qualitätsanforderungsparameter QoS folgende Gewichtswerte $w_b$ (für $b_A$), $w_t$ (für $t_A$), $w_e$ (für $e_A$) angenommen:

|  | $b_A$ | $w_b$ | $t_A$ | $w_t$ | $e_A$ | $w_e$ |
|---|---|---|---|---|---|---|
| Sprachdaten | 16 kBit/s | 1.0 | 300 ms | 0.9 | $10^{-3}$ | 0.8 |
| Dateiübertragung | 10 MBit/s | 0.1 | 500 ms | 0.0 | 0 | 1.0 |

**Bitfehlerwahrscheinlichkeit $e_b$**

Im weiteren werden Vorschriften zur Ermittlung der Bitfehlerwahrscheinlichkeit $e_b$ verschiedener Fehlerkorrekturmechanismen aus der Datenpaketverlustrate $e_f$ hergeleitet.

Es sollen Nutzdaten der Länge len Bit übertragen werden. Diese werden in m Nutzdatensegmente NDS segmentiert. M ist abhängig von der festen Größe eines Zeitschlitzes f sowie der Länge der pro Nutzdatensegment eingefügten Protokollinformation h, die den Platz für die Nutzdaten einschränkt. Der Platz der Nutzdaten pro Datenpaket DP wird mit u bezeichnet und ergibt sich zu

$$u = f - h.$$

Die Anzahl benötigter Datenpakete DP ergibt sich somit zu

$$m = \frac{len}{u} = \frac{len}{f - h}.$$

Die für die Berechnung notwendige Wahrscheinlichkeit für den Verlust eines Datenpakets DP sei $e_f$.

Bei der Einfachübertragung werden m Datenpakete DP zu je u Nutzdatenbits mit einer Datenpaketverlustwahrscheinlichkeit von $e_f$ übertragen. Die Bitfehlerwahrscheinlichkeit $e_b$ berechnet sich durch Summation der Wahrscheinlichkeiten für die Verluste zwischen 0 und aller m Datenpakete DP nach:

$$e_b = \frac{\text{Anzahl verlorener Bits}}{\text{Anzahl Bits gesamt}} = \frac{\sum_{i=0}^{n} i \cdot u \cdot \binom{n}{i} \cdot e_f^i \cdot (1 - e_f)^{n-i}}{n \cdot u}.$$

Der Erwartungswert $E[Bi_{n,p}]$ einer Binominalverteilung ergibt sich nach folgender Vorschrift.

$$E[Bi_{n,p}] = \sum_{i=0}^{n} i \cdot \binom{n}{i} \cdot p^i \cdot (1 - p)^{n-i} \quad \text{und} \quad \frac{E[Bi_{n,p}]}{n} = p.$$

Daraus folgt die Bitfehlerwahrscheinlichkeit $e_b$ zu:

$$e_b = \frac{\sum_{i=0}^{n} i \cdot u \cdot \binom{n}{i} \cdot e_f^i \cdot (1 - e_f)^{n-i}}{n \cdot u} = \frac{u \cdot E[Bi_{n,e_f}]}{n \cdot u} = e_f.$$

Die Bitfehlerwahrscheinlichkeit $e_b$ der Mehrfachübertragung berechnet sich entsprechend. Da jedes Datenpaket DP mehrfach übertragen wird, multiplizieren sich entsprechend die Verlustwahrscheinlichkeiten zu

$$e_b = e_f^2,$$

wobei k die Anzahl der mehrfachen Übertragungen eines Datenpakets DP bezeichnet.

Dementsprechend potenziert sich die Fehlerwahrscheinlichkeit $e_b$ beim sogenannten M-try-ARQ-Verfahren, da jedes Datenpaket DP einmal und bei Verlust noch M-mal übertragen wird. Die Bitfehlerwahrscheinlichkeit $e_b$ Ergibt sich demnach gemäß folgender Vorschrift:

$$e_b = e_f^{1+M}.$$

Bei Verfahren mit Redundanzgenerierung berechnen sich die Verlustwahrscheinlichkeiten etwas anders. Zu m Datenpaketen DP werden x Redundanzzellen berechnet. Treten bei den Redundanzzellen Verluste auf, so beeinflußt dies die Korrektheit der Übertragung nicht, solange keine Datenpakete DP verloren gehen oder höchstens so viele, wie Redundanzzellen korrekt übertragen werden. Die Bitfehlerwahrscheinlichkeit $e_b$ ergibt sich in diesem Fall gemäß folgender Vorschrift:

$$e_b := \frac{1}{n \cdot u} \cdot \left( \sum_{i=0}^{x} 0 \cdot \binom{n+x}{i} \cdot e_f^i \cdot (1-e_f)^{n+x-i} \right) +$$

$$+ \sum_{i=x+1}^{n+x} \left( \sum_{j=i-x}^{\min(n,i)} \frac{\binom{x}{i-j}\binom{n}{j}}{\binom{n+x}{i}} \cdot j \cdot u \cdot e_f^i \cdot (1-e_f)^{n+x-i} \cdot \binom{n+x}{i} \right)$$

$$= \frac{1}{n \cdot u} \sum_{i=x+1}^{n+x} \sum_{j=i-x}^{\min(n,i)} \binom{x}{i-j}\binom{n}{j} j \cdot u \cdot e_f^i \cdot (1-e_f)^{n+x-i}.$$

Diese Formel ist bei den beiden Redundanzverfahren einsetzbar. Beim (n + x, n)-Reed-Solomon müssen n und x eingesetzt werden, der XOR-FEC besitzt zu n Datenpaketen DP nur eine Redundanzzelle, also x = 1.

Im weiteren wird für die einzelnen Fehlerkorrekturmechanismen die mittlere sowie die maximale Anzahl benötigter Datenpakete $p_{med}$ bzw. $p_{max}$ ermittelt.

Bei der Einfachübertragung sind die erforderlichen Datenpakete DP im Mittel wie im Maximum gleich. Es ergibt sich für die an die Mechanismusauswahleinheit zugeführten Parameter:

$$Pmax = p_{med} = \frac{len}{u}.$$

Bei der Mehrfachübertragung ergibt sich für die Parameter:

$$p_{max} = p_{med} = 2 \cdot \frac{len}{u}.$$

Für das Reed-Solomon-Verfahren kann die Anzahl der Redundanzzellen in Abhängigkeit der Fehlerrate festgelegt werden. Über die zu übertragenden Datenpakete DP wird eine von der Fehlerrate abhängige Anzahl von Redundanzzellen berechnet. Die Gesamtzahl der benötigten Datenpakete DP schwankt somit zwischen

$$p_{med} = \frac{len}{u},$$

und

$$p_{max} = \infty,$$

also keine und beliebig vielen Redundanzzellen.

Im Idealfall wird versucht, die Redundanz genau auf die Fehlerrate abzubilden, so daß ausreichend aber nicht unnötige Redundanz vorhanden ist. In dem erfindungsgemäßen Verfahren ist dies möglich, da das Reed-Solomon-Verfahren sowohl tatsächliche Datenpaketverlustrate als auch gewünschte Bitfehlerrate mitgeteilt bekommt.

Bei dem XOR-FEC-Verfahren ist nur eine Redundanzzelle erforderlich. Mit diesem Verfahren kann aber auch nur der Verlust eines Datenpakets DP ausgeglichen werden. Da auch dieses Verfahren ohne Übertragungswiederholung auskommt, läßt sich seine Gesamtzellenzahl zu

$$p_{max} = p_{med} = \frac{len}{u} + 1$$

berechnen.

Beim sogenannten Selective-Repeat-ARQ-Verfahren ergibt sich die Schwierigkeit der Berechnung der Übertragungswiederholungen (Retransmissions). Es wird davon ausgegangen, daß es sich um eine Vollduplex-Übertragungsstrecke handelt, also keine Blockierungen eintreten und bei ausreichender Pufferung so gut wie keine Verzögerungen auftreten.

Geht man davon aus, daß alle Übertragungsfehler erkannt werden können, so liefert das Verfahren eine fehlerfreie Übertragung in einer nicht bestimmbaren Zeit. Das Prinzip versucht eine fehlerfreie Übertragung zu garantieren, was bei Verschlechterung der Fehlerrate einen erheblich größeren Aufwand an Übertragungswiederholung bedeutet. Im Mittel wird sich die Anzahl der Datenpakete inklusive Übertragungswiederholungen auf

$$p_{med} = \frac{len}{u} \cdot (e_f + 1)$$

beschränken, der schlechteste Fall benötigt eine beliebige Anzahl an Datenpaketen DP.

Bei dem gebündelten M-Try-ARQ-Verfahren ergibt sich die minimale Anzahl erforderlicher Datenpakete gemäß

$$p_{med} = \frac{len}{u} \cdot (1 + e_f \cdot M)$$

und die maximale Anzahl benötigter Datenpakete DP gemäß

$$p_{max} = \frac{len}{u} \cdot (1 + \cdot M).$$

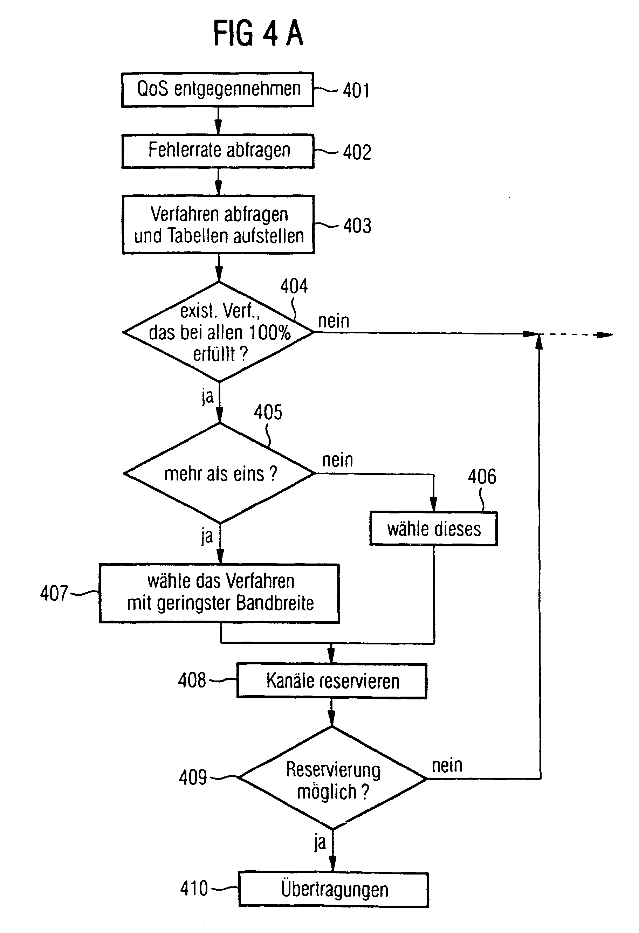

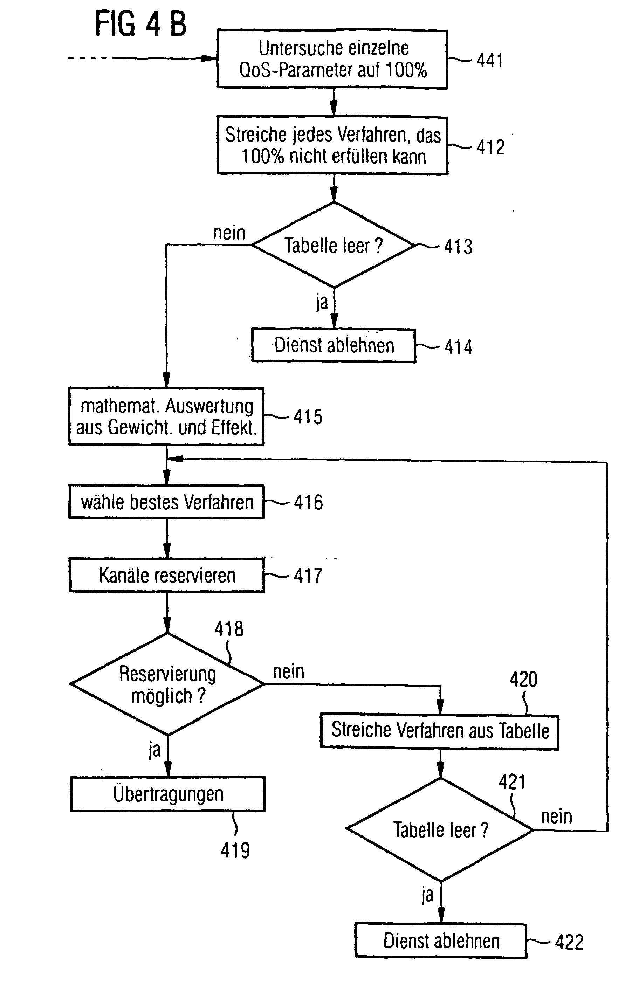

Figur 4 zeigt in einem Ablaufdiagramm das gesamte Verfahren in detaillierten Schritten.

In einem ersten Schritt werden von dem adaptiven Fehlerkorrekturmodul AFK von der Anwendung ANi die Qualitätsanforderungsparameter QoS empfangen (Schritt 401).

In einem zweiten Schritt 402 wird die augenblickliche tatsächliche Fehlerrate für das gesamte Übertragungssystem festgestellt.

Von der Mechanismusauswahleinheit AUS werden in einem dritten Schritt 403 von jedem Korrekturmodul Kj die oben beschriebenen Parameter abgefragt und es wird eine Tabelle mit den einzelnen Parametern ermittelt und gespeichert.

In einem weiteren Schritt 404 wird überprüft, ob ein Fehlerkorrekturmechanismus existiert, bei dem alle Qualitätsanforderungen erfüllt sind.

Ist dies der Fall, so wird in einem weiteren Schritt 405 überprüft, ob mehr als ein Fehlerkorrekturmechanismus existiert, bei dem alle Anforderungen 100%-ig erfüllt werden. Ist dies nicht der Fall, wird in einem Auswahlschritt 406 der Fehlerkorrekturmechanismus ausgewählt, der die Anforderungen erfüllt. Existieren mehrere Fehlerkorrekturmechanismen, die die Anforderungen erfüllen, so wird in einem zweiten Auswahlschritt 407 derjenige Fehlerkorrekturmechanismus ausgewählt, für den sich der geringste Bandbreitenbedarf ergibt. Für den jeweiligen Fehlerkorrekturmechanismus wird in einem anschließenden Schritt 408 für die Anwendung ANi der entsprechende Kanal bzw. die entsprechenden Kanäle für die Übertragung reserviert. Ist eine Reservierung möglich, was in einem Überprüfungsschritt 409 nachgeprüft wird, so werden die Nutzdatensegmente NDS für die Anwendung ANi unter Einbeziehung der Codierungseinheit CE und der Übertragungseinheit OE zu der zweiten Anordnung A2 übertragen (Schritt 410).

Ist keine Reservierung möglich (Schritt 409) oder existiert kein Fehlerkorrekturmechanismus, mit dem es möglich ist alle Anforderungen 100%ig zu erfüllen (vgl. Vergleichsschritt 404, so werden die einzelnen Qualitätsanforderungsparameter QoS daraufhin untersucht, ob sie von einem Fehlerkorrekturmechanismus 100 %-ig erfüllt werden können (Schritt 411).

Jedes Fehlerkorrekturverfahren, welches den Qualitätsanforderungsparameter jeweils nicht genügen kann, wird gestrichen (Schritt 412).

Ist die resultierende Tabelle leer, was in einem weiteren Schritt 413 überprüft wird, so wird der angeforderte Dienst, d.h. die angeforderte Übertragung, abgelehnt (Schritt 414).

Ist die Tabelle jedoch nicht leer, so erfolgt eine im weiteren erläuterte mathematische Auswertung aus Gewichtung und Effekt der einzelnen Qualitätsanforderungsparameter (Schritt 415).

Die Auswertung in Schritt 415 erfolgt durch Vektormultiplikation der den Qualitätsanforderungsparametern zugeordneten Gewichtswerten und tatsächlich erbrachter Dienstqualität je Fehlerkorrekturmechanismus. Hierfür werden die Ergebnisparameter der einzelnen Fehlerkorrekturmechanismen mit den Qualitätsanforderungsparametern QoS verglichen und gegeneinander normiert. Dabei werden die einzelnen Parameter mit Hilfe der tanh-Funktion auf den Wertebereich [-1; +1] umgerechnet, so daß erkennbar ist, welcher erbrachter Wert ober- bzw. unterhalb des geforderten Wertes liegt, also wieweit entfernt vom Idealfall der entsprechende Fehlerkorrekturmechanismus ist.

Der Idealfall wird dabei durch den Wert 0 dargestellt, -1 ist der schlechtmöglichste Wert, +1 der beste.

Die Bewertung der Dienstqualität erfolgt durch einen ersten Parameter $res_b$ für Bandbreite, einen zweiten Parameter rest für Verzögerung und einem dritten Parameter $res_e$ für die Bitfehlerrate.

Die einzelnen Parameter $res_b$, rest, $res_e$ werden gemäß folgenden Vorschriften ermittelt:

$$res_b = \tanh\left(\frac{b_i - b_A}{b_A}\right);$$

$$res_t = \tanh\left(\frac{t_A - t_i}{t_A}\right);$$

$$res_e = \tanh\left(\frac{\log e_A - \log e_i}{10}\right),$$

wobei mit A die angeforderten Werte indiziert werden und mit i die tatsächlich erbrachten Werte (i = 1,..., m). Mit m wird die Anzahl der berücksichtigten Fehlerkorrekturmechanismen bezeichnet.

Somit bekommen alle drei Parameter gleiches Gewicht, d.h. eine beispielsweise 10 %-ige Übererfüllung eines Wertes durch einen Fehlerkorrekturmechanismus kann durch die 10 %-ige Unterschreitung eines anderen Wertes wieder zunichte gemacht werden und stellt den Fehlerkorrekturmechanismus somit auf die gleiche Stufe mit einem anderen Verfahren, das beide Werte genau erfüllt.

Als effektivster Fehlerkorrekturmechanismus gilt derjenige mit dem höchsten Summanden R, der sich gemäß folgender Vorschrift ergibt:

$$R = w_b \cdot res_b + w_t \cdot res_t + w_e \cdot res_e .$$

Der gemäß dem oben beschriebenen Auswahlkriterium R effektivste Fehlerkorrekturmechanismus wird ausgewählt (Schritt 416) und der bzw. die erforderlichen Kanäle für die Übertragung werden reserviert (Schritt 417).

Ist eine Reservierung möglich, was in einem Überprüfungsschritt 418 kontrolliert wird, so werden die Datenpakete codiert und übertragen (Schritt 419).

Ist eine Reservierung nicht möglich, so wird der entsprechende Fehlerkorrekturmechanismus aus der gespeicherten Tabelle gestrichen (Schritt 420).

Ist die Tabelle leer (Überprüfungsschritt 421), so wird der Dienst abgelehnt (Schritt 422) und es erfolgt keine Übertragung der Nutzdatensegmente NDS.

Ist die Tabelle jedoch nicht leer, so wird der nunmehr in der Tabelle gespeicherte beste Fehlerkorrekturmechanismus ausgewählt und es wird zu dem Verfahrensschritt 416 verzweigt.

Im weiteren werden einige Alternativen zu dem oben beschriebenen Ausführungsbeispiel aufgezeigt.

Das Verfahren eignet sich sehr gut für eine drahtlose Übertragung digitaler Daten, beispielsweise im Bereich des Mobilfunks, z.B. unter Verwendung des DECT-Standards.

Das Verfahren und die Anordnung sind jedoch auch in allen anderen Datenübertragungssystemen DS einsetzbar.

Die Erfindung ist nicht auf das oben beschriebene Prinzip des TDMA beschränkt.

Weitere Qualitätsanforderungsparameter, beispielsweise Anforderungen hinsichtlich Verzögerungsschwankungen können ebenfalls ohne weiteres im Rahmen der Erfindung berücksichtigt werden.

Ferner kann es je nach Implementierung sein, daß die Anwendung ANi bei jedem einzelnen zu übertragenden Nutzdatensegment NDS die Qualitätsanforderungsparameter QoS dem adaptiven Fehlerkorrekturmodul AFK mit übergeben muß, oder aber das adaptive Fehlerkorrekturmodul AFK speichert die Zuordnung der Qualitätsanforderungsparameter QoS zu der jeweiligen Anwendung ANi. Durch die erste Möglichkeit kann eine Anwendung ANi auch im Laufe der Übertragung die Anforderungen ändern, was den Einsatz einer Anwendung ANi mit sich ändernden Qualitätsanforderungen ermöglichen würde.

Weiterhin ist die oben beschriebene Gewichtungsmöglichkeit nicht auf eine derartige Gewichtung beschränkt. Auch eine beliebige Gewichtung z.B. unter Verwendung von Zahlenwerten kann selbstverständlich eingesetzt werden (Werte in einem vorgebbaren Zahlenintervall [x, y]).

Die Normierungsfunktion tanh() kann durch eine beliebige andere Normierungsfunktion ersetzt werden.

Zur weiteren Verdeutlichung der Erfindung wird im folgenden ein Zahlenbeispiel dargestellt, bei dem eine Bildtelefonanwendung einen Echtzeittransport von Videodaten über ein DECT-Funksystem anfordert. Das DECT-Übertragungssystem besitzt 12 Kanäle mit belegbaren $f = 320$ Bit je Zeitschlitz f. Die Laufzeit eines solchen Rahmens R beträgt $t_f = 10$ms. Die aktuelle Datenpaketverlustwahrscheinlichkeit betrage $e_f = 10^{-3}$ bei einer Länge der gesamt zu übertragenden Nutzdaten len = 2400 Bit:

Die einzelnen Qualitätsanforderungsparameter QoS sind in der folgenden Tabelle zusammengestellt:

|  | $b_A$ | $w_b$ | $t_A$ | $w_t$ | $e_A$ | $w_e$ |
|---|---|---|---|---|---|---|
| Bildtelefon | 64 kBit/s | 1.0 | 150ms | 0.9 | $10^{-6}$ | 0.8 |

Zur einfacheren Darstellung wird die Länge des Protokollkopfes pro Datenpaket DP für alle Fehlerkorrekturmechanismen gleich auf $h = 32$ Bit gesetzt. Mit diesen Parametern berechnet sich die Effektivität der einzelnen Fehlerkorrekturmechanismen wie folgt:

| i | Verfahren | $p_{med}/p_{max}$ | Bitfehlerwahrscheinlichkeit $e_b$ |
|---|---|---|---|
| 1 | Einfachübertragung | 10/10 | 0.001 |
| 2 | Doppelübertragung | 19/19 | 0.000001 |
| 3 | XOR-FEC | 11/11 | 0.000008964 |
| 4 | Reed-Solomon-FEC (x=2) | 12/12 | 0.0000000447 |
| 5 | Selective-Repeat ARQ | 10/∞ | 0 |
| 6 | Geb. M-try ARQ (M=1) | 11/21 | 0.000001 |

Daraus errechnet sich die Bandbreite $b_i$, die max. Laufzeit ti sowie die Bitfehlerwahrscheinlichkeit $e_i$ für den jeweiligen Fehlerkorrekturmechanismus gemäß der folgenden Tabelle:

| i | c | $b_i$ | $res_b$ | $t_i$ | $res_t$ | $e_i$ | $res_e$ |
|---|---|---|---|---|---|---|---|
| 1 | 3 | 72 kbit/s | 0.124353 | 40ms | 0.612763 | 0.001 | -0.598480 |

(fortgesetzt)

| i | c | $b_i$ | $res_b$ | $t_i$ | $res_t$ | $e_i$ | $res_e$ |
|---|---|---|---|---|---|---|---|
| 2 | 6 | 75 kbit/s | 0.182148 | 40ms | 0.621022 | 0.000001 | 0.000000 |
| 3 | 3 | 65 kbit/s | 0.022714 | 40ms | 0.600119 | 0.00000896 | -0.215873 |
| 4 | 4 | 80 kbit/s | 0.244919 | 30ms | 0.664037 | 0.00000004 | 0.301022 |
| 5 | 3 | 72 kbit/s | 0.124353 | ∞ | -1.000000 | 0 | 1.000000 |
| 6 | 4 | 80 kbit/s | 0.244919 | 40ms | 0.527494 | 0.000001 | 0.000000 |

Die Nettodatenrate bi berechnet sich gemäß

$$b_i = \frac{len \cdot c}{p_{med} \cdot t_f}.$$

Falls sie geringer ist als die gewünschte Bandbreite, müssen mehrere Kanäle c reserviert werden, die die Datenpakete DP parallel übertragen. Die max. Laufzeit ti ist somit für den jeweiligen Fehlerkorrekturmechanismus nach folgender Vorschrift zu ermitteln:

$$t_i = \frac{p_{max} \cdot t_f}{c}.$$

Aus der Vektormultiplikation der Gewichtungen w mit den res-Parametern ergeben sich folgende Endwerte, die in der folgenden Resultatstabelle dargestellt sind:

| i | $res_b \cdot w_b$ | $res_t \cdot w_t$ | $res_e \cdot w_e$ | Ergebnis |
|---|---|---|---|---|
| 1 | 0.124353·1 | 0.612763·0.9 | -0.598480·0.8 | 0.197056 |
| 2 | 0.182148·1 | 0.621022·0.9 | 0.000000·0.8 | 0.741067 |
| 3 | 0.022714·1 | 0.600119·0.9 | -215873·0.8 | 0.390124 |
| 4 | 0.244919·1 | 0.664037·0.9 | 0.301022·0.8 | 1.083370 |
| 5 | 0.124353·1 | -1.000000·0.9 | 1.000000·0.8 | 0.024353 |
| 6 | 0.244919·1 | 0.527494·0.9 | 0.000000·0.8 | 0.719663 |

Die Mechanismusauswahleinheit AUS entscheidet sich für den Fehlerkorrekturmechanismus, der den größten Ergebniswert aufweist, hier also für die Nr. 4, das Reed-Solomon-Verfahren.

Anschaulich kann die Erfindung darin gesehen werden, daß aus einer Menge vorgegebener Fehlerkorrekturmechanismen unter Berücksichtigung vorgegebener Rahmenbedingungen (Qualitätsanforderung, Zustand des Übertragungssystems) der unter den Rahmenbedingungen "optimale" Fehlerkorrekturmechanismus ausgewählt wird und die Daten unter Verwendung des Fehlerkorrekturmechanismus codiert und übertragen werden.

Im Rahmen dieses Dokuments wurden folgende Veröffentlichungen zitiert:

[1] Lin, Costello, Error Control Coding, Fundamentals and Applications, Prentice-Hall, ISBN 0-13-283796-X, 1983

[2] A. S. Tannenbaum, Computer-Netzwerke, 2. Auflage, Wolframs Fachverlag, ISBN 3-925328-79-3, S. 306-310, 1992

[3] R. Braden, Resource Reservation Protocol, Internet-Draft, October 1996

**Patentansprüche**

1.    Verfahren zur Codierung (CE) digitaler Daten (DS,NDS), die in Nutzdatensegmente (NDS) segmentiert sind, unter Verwendung eines ausgewählten Fehlerkorrekturmechanismus (AFK/Ki) aus einer vorgebbaren Menge von Feh-

lerkorrekturmechanismen (AFK/$K_1...K_m$).

- bei dem mindestens ein Zustandsparameter (QoS) ermittelt wird, (401, $AN_{1...n}$),
- bei dem unter Verwendung des Zustandsparameters (NDS,QoS) für jeden Fehlerkorrekturmechanismus (AFK-$K_{1...m}$) aus der Menge mindestens ein Auswahlparameter ($p_{med}$,$p_{max}$,$e_b$) ermittelt wird, mit dem eine Eigenschaft ($p_{med}$,$p_{max}$,$e_b$) des jeweiligen Fehlerkorrekturmechanismus (AFK-$K_{1...m}$) bezüglich des ermittelten Zustandsparameters (NDS,QoS) beschrieben wird (441),
- bei dem ein Fehlerkorrekturmechanismus (AFK-$K_i$) ausgewählt wird (AUS,416) und
- bei dem die Nutzdatensegmente unter Verwendung des ausgewählten Fehlerkorrekturmechanismus codiert werden (CE,410/419).

2. Verfahren zur Codierung (CE) digitaler Daten (DS,NDS), die in Nutzdatensegmente (NDS) segmentiert sind, unter Verwendung eines ausgewählten Fehlerkorrekturmechanismus (AFK/Ki) aus einer vorgebbaren Menge von Fehlerkorrekturmechanismen (AFK/$K_{1...m}$) ,

- bei dem mindestens ein Verbindungsparameter ($b_A$,$w_b$,$t_a$,$w_t$ $e_A$,$w_e$,QoS)
- bei dem unter Verwendung des Verbindungsparameters für jeden Fehlerkorrekturmechanismus aus der Menge mindestens ein Auswahlparameter ($res_b \cdot w_b + res_t \cdot w_t + res_e \cdot w_e$) ermittelt wird, mit dem eine Eigenschaft des jeweiligen Fehlerkorrekturmechanismus bezüglich des ermittelten Verbindungsparameters beschrieben wird (441),
- bei dem ein Fehlerkorrekturmechanismus ausgewählt wird(AUS,416) und
- bei dem die Nutzdatensegmente unter Verwendung des ausgewählten Fehlerkorrekturmechanismus codiert werden (CE, 410/419).

3. Verfahren zur Codierung (CE) digitaler Daten (DS, NDS) die in Nutzdatensegmente (NDS) segmentiert sind, unter Verwendung eines ausgewählten Fehlerkorrekturmechanismus (AFK/$K_i$) aus einer vorgebbaren Menge von Fehlerkorrekturmechanismen (AFK/$K_{1...m}$)

- bei dem mindestens ein Zustandsparameter (QoS) und mindestens ein Verbindungsparameter ermittelt werden (401),
- bei dem unter Verwendung des Zustandsparameters und des Verbindungsparameters für jeden Fehlerkorrekturmechanismus aus der Menge von Fehlerkorrekturmechanismen mindestens ein Auswahlparameter ermittelt wird, mit dem eine Eigenschaft des jeweiligen Fehlerkorrekturmechanismus bezüglich des ermittelten Zustandsparameters oder Verbindungsparameters beschrieben wird (441)
- bei dem ein Fehlerkorrekturmechanismus (AFK, $K_i$) ausgewählt wird (AUS, 416) und
- bei dem die Nutzdatensegmente unter Verwendung des ausgewählten Fehlerkorrekturmechanismus codiert werden (CE, 410, 419) .

4. Verfahren nach Anspruch 1 oder 3,
   bei dem mindestens zwei Zustandsparameter (NDS, QoS) ermittelt und berücksichtigt werden.

5. Verfahren nach einem der Ansprüche 2 und 4,
   bei dem mindestens zwei Verbindungsparameter $b_A$,$w_b$,$t_A$,$w_t$,$e_A$,$w_e$,QoS,NDS..) ermittelt und berücksichtigt werden.

6. Verfahren nach einem der Ansprüche 1 bis 5,
   bei dem mindestens zwei Auswahlparameter ($res_b \cdot w_b$,$res \cdot w_t$,$res_e \cdot w_e$)ermittelt und berücksichtigt werden.

7. Verfahren nach einem der Ansprüche 1 bis 6,
   bei dem die Menge von Fehlerkorrekturmechanismen mindestens einen der folgenden Fehlerkorrekturmechanismen (AFK, $K_{1...m}$) aufweist:

- Mehrfachübertragung der Nutzdatensegmente,
- Automatic Repeat Request
- Fehlerkorrektur,
- Hybrider Mechanismus Automatic Repeat Request / Fehlerkorrektur.

8. Verfahren nach einem der Ansprüche 1 bis 7,

bei dem der mindestens eine Zustandsparameter zumindest einen der folgenden Parameter umfasst:

- eine Längenangabe (Len) der digitalen Daten, oder
- eine Datenpaketgröße(Len), die sich aus der Summe der Länge des Nutzdatensegments und der Länge einer Kontrollinformation (h) ergibt, die dem Nutzdatensegment hinzugefügt wird.

9. Verfahren nach einem der Ansprüche 2 bis 8,
   bei dem der mindestens eine Verbindungsparameter zumindest eine Datenpaketverlustrate ($e_f$) umfasst.

10. Verfahren nach einem der Ansprüche 1 bis 9,
    bei dem der mindestens eine Auswahlparameter zumindest einen der folgenden Parameter umfasst:

    - eine mittlere Anzahl von Datenpaket, die für die Übertragung der digitalen Daten erforderlich ist ($p_{med}$),
    - eine maximale Anzahl ($p_{max}$) von Datenpaket, die für die Übertragung der digitalen Daten erforderlich ist, oder
    - eine Bitfehlerrate ($e_b$).

11. Verfahren nach einem der Ansprüche 1 bis 10,

    - bei dem der mindestens eine Auswahlparameter gewichtet ($w_b, w_t, w_e$) wird.

12. Verfahren nach einem der Ansprüche 1 bis 11, eingesetzt zur drahtlosen Übertragung (419) digitaler Daten (DS).

13. Anordnung ($A_1, A_2$) zur Codierung digitaler Daten (DS), die in Nutzdatensegmente (NDS) segmentiert sind, unter Verwendung eines ausgewählten Fehlerkorrekturmechanismus (AFK/Ki) aus einer vorgebbaren Menge von Fehlerkorrekturmechanismen (AFK/$K_{1\cdots m}$) ,

    - bei der eine Ermittlungseinheit zur Ermittlung mindestens eines Zustandsparameters (QoS) vorgesehen ist,
    - bei der für jede Fehlerkorrekturmechanismus (AFK/$K_{1\cdots m}$) ein Korrekturmodul ($K_{1\cdots m}$) vorgesehen ist, mit dem unter Verwendung des Zustandsparameters (QoS) jeweils mindestens ein Auswahlparameter ($p_{med}, p_{max}, e_b\cdots$) ermittelt wird, mit dem eine Eigenschaft des jeweiligen Fehlerkorrekturmechanismus ($K_{1\cdots m}$) bezüglich des ermittelten Zustandsparameters beschrieben wird,
    - bei der eine Mechanismusauswahleinheit (AUS) vorgesehen ist, mit dem ein Fehlerkorrekturmechanismus (AFK/$K_i$) ausgewählt wird,
    - bei der eine Codiereinheit (CE) vorgesehen ist zur Codierung der Nutzdatensegmente (NDS) unter Verwendung des ausgewählten Fehlerkorrekturmechanismus (AFK/$K_i$).

14. Anordnung ($A_1, A_2$) zur Codierung digitaler Daten (DS), die in Nutzdatensegmente (NDS) segmentiert sind, unter Verwendung eines ausgewählten Fehlerkorrekturmechanismus (AFK/$K_{1\cdots m}$) aus einer vorgebbaren Menge von Fehlerkorrekturmechanismen,

    - bei der eine Ermittlungseinheit (AFK) zur Ermittlung mindestens eines Verbindungsparameters vorgesehen ist,
    - bei der für jeden Fehlerkorrekturmechanismus (AFK) ein Korrekturmodul ($K_{1\cdots m}$) vorgesehen ist, mit dem unter Verwendung des Verbindungsparameters jeweils mindestens ein Auswahlparameter ermittelt wird, mit dem eine Eigenschaft des jeweiligen Fehlerkorrekturmechanismus bezüglich des ermittelten Verbindungsparameters beschrieben wir,
    - bei der ein Mechanismusauswahleinheit (AUS) vorgesehen ist, mit dem ein Fehlerkorrekturmechanismus ausgewählt wird,
    - bei der eine Codiereinheit (CE)vorgesehen ist zur Codierung der Nutzdatensegmente unter Verwendung des ausgewählten Fehlerkorrekturmechanismus.

15. Anordnung ($A_1, A_2$) zur Codierung digitaler Daten (DS), die in Nutzdatensegmente (NDS) segmentiert sind, unter Verwendung eines ausgewählten Fehlerkorrekturmechanismus (AFK) aus einer vorgebbaren Menge von Fehlerkorrekturmechanismen (AFK),

    - bei der eine Ermittlungseinheit (AFK) zur Ermittlung mindestens eines Zustandsparameters und mindestens eines Verbindungsparameters vorgesehen ist,
    - bei der für jeden Fehlerkorrekturmechanismus (AFK) ein Korrekturmodul ($K_{1\cdots m}$) vorgesehen ist, mit dem unter Verwendung des Zustandsparameters und des Verbindungsparameters jeweils mindestens ein Auswahlpa-

rameter ($p_{med}$,$p_{max}$,$e_b$)ermittelt wird, mit dem eine Eigenschaft des jeweiligen Fehlerkorrekturmechanismus (AFK) bezüglich des ermittelten Zustandsparameters und des Verbindungsparameters beschrieben wird,

- bei der eine Mechanismusauswahleinheit (AUS) vorgesehen ist, mit dem ein Fehlerkorrekturmechanismus ausgewählt wird,
- bei der eine Codiereinheit (CE) vorgesehen ist zur Codierung der Nutzdatensegmente unter Verwendung des ausgewählten Fehlerkorrekturmechanismus.

16. Anordnung nach Anspruch 13 oder 15,
bei der die Ermittlungseinheit (AFK) derart eingerichtet ist, dass mindestens zwei Zustandsparameter ermittelt und berücksichtigt werden.

17. Anordnung nach Anspruch 14 oder 15,
bei der die Ermittlungseinheit (AFK) derart eingerichtet ist, dass mindestens zwei Verbindungselemente ermittelt und berücksichtigt werden.

18. Anordnung nach einem der Ansprüche 13 bis 17,
bei der die Mechanismusauswahleinheit (AUS) derart eingerichtet ist, dass mindestens zwei Auswahlparameter ermittelt und berücksichtigt werden.

19. Anordnung nach einem der Ansprüche 13 bis 18,
bei der die Menge von Fehlerkorrekturmechanismen (AFK) mindestens einen der folgenden Fehlerkorrekturmechanismen aufweist:

- Mehrfachübertragung der Nutzdatensegmente,
- Automatic Repeat Request
- Fehlerkorrektur
- Hybrider Mechanismus Automatic Repeat Request / Fehlerkorrektur.

20. Anordnung nach einem der Ansprüche 13 bis 19,
bei der mindestens eine Zustandsparameter zumindest einen der folgenden Parameter umfasst:

- eine Längenangabe (Len) der digitalen Daten, oder
- eine Datenpaketgröße (Len) die sich aus der Summe der Länge des Nutzdatensegments (NDS) und der Länge einer Kontrollinformation (SI) ergibt, die dem Nutzdatensegment (NDS) hinzugefügt wird.

21. Anordnung nach einem der Ansprüche 14 bis 20,
bei der der mindestens eine Verbindungsparameter zumindest eine Datenpaketverlustrate ($e_f$) umfasst.

22. Anordnung nach einem der Ansprüche 13 bis 21,
bei der der mindestens eine Auswahlparameter zumindest eine der folgenden Parameter umfasst:

- eine mittlere Anzahl ($p_{med}$) von Datenpaket, die für die Übertragung der digitalen Daten erforderlich ist,
- eine maximale Anzahl ($p_{max}$) von Datenpaket, die für die Übertragung der digitalen Daten erforderlich ist, oder
- eine Bitfehlerrate ($e_n$).

23. Anordnung nach einem der Ansprüche 13 bis 22,
bei der die Mechanismusauswahleinheit (AUS) derart eingerichtet ist, dass der mindestens eine Auswahlparameter gewichtet wird.

24. Drahtloses Kommunikationssystem mit mindestens einer Anordnung (A1,A2) nach einem der Ansprüche 1 bis 12.

**Claims**

1. Method for coding (CE) digital data (DS, NDS), which is segmented into user data segments (NDS), using an error correction mechanism (AFK/Ki) selected from a predefinable set of error correction mechanisms (AFK/$K_1$ ... $K_m$),

- with which at least one status parameter (QoS) is determined (401, $AN_{1...n}$),

- with which at least one selection parameter ($p_{med}$, $p_{max}$, $e_b$) is determined using the status parameter (NDS, QoS) for every error correction mechanism (AFK/$K_{1\cdots m}$) from the set, to describe a characteristic ($p_{med}$, $p_{max}$, $e_b$) of the respective error correction mechanism (AFK/$K_{1\cdots m}$) in respect of the status parameter (NDS, QoS) determined (441),
- with which an error correction mechanism (AFK/$K_i$) is selected (AUS, 416) and
- with which the user data segments are coded using the selected error correction mechanism (CE, 410/419).

2. Method for coding (CE) digital data (DS, NDS), which is segmented into user data segments (NDS), using an error correction mechanism (AFK/Ki) selected from a predefinable set of error correction mechanisms (AFK/$K_{1\cdots m}$),

- with which at least one connection parameter ($b_A$, $w_b$, $t_a$, $w_t$, $e_A$, $w_e$, QoS),
- with which at least one selection parameter ($res_b.w_b+res_t.w_t+res_e.w_e$) is determined using the connection parameter for every error correction mechanism from the set, to describe a characteristic of the respective error correction mechanism in respect of the connection parameter determined (441),
- with which an error correction mechanism is selected (AUS, 416) and
- with which the user data segments are coded using the selected error correction mechanism (CE, 410/419).

3. Method for coding (CE) digital data (DS, NDS), which is segmented into user data segments (NDS), using an error correction mechanism (AFK/$K_i$) selected from a predefinable set of error correction mechanisms (AFK/$K_{1\cdots m}$) ,

- with which at least one status parameter (QoS) and at least one connection parameter are determined (401),
- with which at least one selection parameter is determined using the status parameter and the connection parameter for every error correction mechanism from the set of error correction mechanisms, to describe a characteristic of the respective error correction mechanism in respect of the status parameter or connection parameter determined (441),
- with which an error correction mechanism (AFK/$K_i$) is selected (AUS, 416) and
- with which the user data segments are coded using the selected error correction mechanism (CE, 410, 419).

4. Method according to claim 1 or 3,
with which at least two status parameters (NDS, QoS) are determined and taken into account.

5. Method according to one of claims 2 and 4,
with which at least two connection parameters ($b_A$, $w_b$, $t_A$, $w_t$, $e_A$, $w_e$, QoS, NDS, ...) are determined and taken into account.

6. Method according to one of claims 1 to 5,
with which at least two selection parameters ($res_b.w_b+res_t.w_t+res_e.w_e$) are determined and taken into account.

7. Method according to one of claims 1 to 6,
with which the set of error correction mechanisms comprises at least one of the following error correction mechanisms (AFK/$K_{1\cdots m}$) :

- multiple transmission of the user data segments,
- automatic repeat request,
- error correction,
- hybrid automatic repeat request/error correction mechanism.

8. Method according to one of claims 1 to 7,
with which the at least one status parameter includes at least one of the following parameters:

- length data (Len) for the digital data, or
- data packet size (Len), resulting from the sum of the length of the user data segment and the length of a control information item (h) which is added to the user data segment.

9. Method according to one of claims 2 to 8,
with which the at least one connection parameter includes at least a data packet loss rate ($e_f$).

10. Method according to one of claims 1 to 9,

with which the at least one selection parameter includes at least one of the following parameters:

- a mean number of data packets required for transmission of the digital data ($p_{med}$),
- a maximum number ($p_{max}$) of data packets required for transmission of the digital data, or
- a bit error rate ($e_b$).

**11.** Method according to one of claims 1 to 10,

- with which the at least one selection parameter is weighted ($w_b$, $w_t$, $w_e$).

**12.** Method according to one of claims 1 to 11, deployed for the wireless transmission (419) of digital data (DS) .

**13.** Arrangement ($A_1$, $A_2$) for coding digital data (DS), which is segmented into user data segments (NDS), using an error correction mechanism (AFK/Ki) selected from a predefinable set of error correction mechanisms (AFK/$K_{1\cdots m}$)

- with which a determination unit is provided to determine at least one status parameter (QoS),
- with which a correction module ($K_{1\cdots m}$) is provided for every error correction mechanism (AFK/$K_{1\cdots m}$), with which at least one selection parameter ($p_{med}$, $p_{max}$, $e_b$, ...) is determined using the status parameter (QoS), to describe a characteristic of the respective error correction mechanism ($K_{1\cdots m}$) in respect of the status parameter determined,
- with which a mechanism selection unit (AUS) is provided, which is used to select an error correction mechanism (AFK/$K_i$),
- with which a coding unit (CE) is provided to code the user data segments (NDS) using the selected error correction mechanism (AFK/$K_i$).

**14.** Arrangement ($A_1$, $A_2$) for coding digital data (DS), which is segmented into user data segments (NDS), using an error correction mechanism (AFK/$K_{i\cdots m}$) selected from a predefinable set of error correction mechanisms

- with which a determination unit (AFK) is provided to determine at least one connection parameter,
- with which a correction module ($K_{1\cdots m}$) is provided for every error correction mechanism (AFK), with which at least one selection parameter is determined using the connection parameter, to describe a characteristic of the respective error correction mechanism in respect of the connection parameter determined,
- with which a mechanism selection unit (AUS) is provided, which is used to select an error correction mechanism,
- with which a coding unit (CE) is provided to code the user data segments using the selected error correction mechanism.

**15.** Arrangement ($A_1$, $A_2$) for coding digital data (DS), which is segmented into user data segments (NDS), using an error correction mechanism (AFK) selected from a predefinable set of error correction mechanisms (AFK)

- with which a determination unit (AFK) is provided to determine at least one status parameter and at least one connection parameter,
- with which a correction module ($K_{1\cdots m}$) is provided for every error correction mechanism (AFK), with which at least one selection parameter ($p_{med}$, $p_{max}$, $e_b$) is determined using the status parameter and the connection parameter, to describe a characteristic of the respective error correction mechanism (AFK) in respect of the status parameter and connection parameter determined,
- with which a mechanism selection unit (AUS) is provided, which is used to select an error correction mechanism,
- with which a coding unit (CE) is provided to code the user data segments (NDS) using the selected error correction mechanism.

**16.** Arrangement according to claim 13 or 15,
with which the determination unit (AFK) is set up such that at least two status parameters are determined and taken into account.

**17.** Arrangement according to claim 14 or 15,
with which the determination unit (AFK) is set up such that at least two connection elements are determined and taken into account.

EP 0 993 712 B1

**18.** Arrangement according to one of claims 13 to 17,
with which the mechanism selection unit (AUS) is set up such that at least two selection parameters are determined and taken into account.

**19.** Arrangement according to one of claims 13 to 18,
with which the set of error correction mechanisms (AFK) comprises at least one of the following error correction mechanisms:

- multiple transmission of the user data segments,
- automatic repeat request,
- error correction,
- hybrid automatic repeat request/error correction mechanism.

**20.** Arrangement according to one of claims 13 to 19,
with which the at least one status parameter includes at least one of the following parameters:

- length data (Len) for the digital data, or
- data packet size (Len), resulting from the sum of the length of the user data segment (NDS) and the length of a control information item (SI) which is added to the user data segment (NDS).

**21.** Arrangement according to one of claims 14 to 20,
with which the at least one connection parameter includes at least a data packet loss rate ($e_f$).

**22.** Arrangement according to one of claims 13 to 21,
with which the at least one selection parameter includes at least one of the following parameters:

- a mean number of data packets ($p_{med}$) required for transmission of the digital data,
- a maximum number ($p_{max}$) of data packets required for transmission of the digital data, or
- a bit error rate ($e_b$).

**23.** Arrangement according to one of claims 13 to 22,
with which the mechanism selection (AUS) is set up such that the at least one selection parameter is weighted.

**24.** Wireless communication system with at least one arrangement (A1, A2) according to one of claims 1 to 12.

## Revendications

**1.** Procédé pour le codage (CE) de données numériques (DS, NDS), qui sont segmentées en segments de données utiles (NDS), avec l'utilisation d'un mécanisme de correction d'erreur (AFK/$K_i$) sélectionné à partir d'un ensemble prédéfinissable de mécanismes de correction d'erreur (AFK/$K_1$...$K_m$),

- dans lequel au moins un paramètre d'état (QoS) est déterminé (401, $AN_{1...n}$) ,
- dans lequel, avec l'utilisation du paramètre d'état (NDS, QoS), on détermine pour chaque mécanisme de correction d'erreur (AFK-$K_{1...m}$) à partir d'un ensemble au moins un paramètre de sélection ($p_{med}$, $p_{max}$, $e_b$) avec lequel on décrit (441) une propriété ($p_{med}$, $p_{max}$, $e_b$) du mécanisme de correction d'erreur (AFK-$K_{1...m}$) respectif en ce qui concerne le paramètre d'état (NDS, QoS) déterminé,
- dans lequel un mécanisme de correction d'erreur (AFK-$K_i$) est sélectionné (AUS, 416) et
- dans lequel les segments de données utiles sont codés avec l'utilisation du mécanisme de correction d'erreur sélectionné (CE, 410/419).

**2.** Procédé pour le codage (CE) de données numériques (DS, NDS), qui sont segmentées en segments de données utiles (NDS), avec l'utilisation d'un mécanisme de correction d'erreur (AFK/$K_i$) sélectionné à partir d'un ensemble prédéfinissable de mécanismes de correction d'erreur (AFK/$K_{1...m}$),

- dans lequel au moins un paramètre de connexion ($b_A$, $w_b$, $t_a$, $w_t$, $e_A$, $w_e$, QoS) est déterminé,
- dans lequel avec l'utilisation du paramètre de connexion et pour chaque mécanisme de correction d'erreur, on détermine à partir d'un ensemble au moins un paramètre de sélection ($res_b \cdot w_b + res_t \cdot w_t + res_e \cdot w_e$) avec

**18**

lequel on décrit une propriété du mécanisme de correction d'erreur respectif en ce qui concerne le paramètre de connexion déterminé (441),

- dans lequel on sélectionne un mécanisme de correction d'erreur (AUS, 416) et
- dans lequel les segments de données utiles sont codés avec l'utilisation du mécanisme de correction d'erreur sélectionné (CE, 410/419).

3. Procédé pour le codage (CE) de données numériques (DS, NDS), qui sont segmentés en segments de données utiles (NDS), avec l'utilisation d'un mécanisme de correction d'erreur (AFK/$K_i$) sélectionné à partir d'un ensemble prédéfinissable de mécanismes de correction d'erreur (AFK/$K_{1\cdots m}$)

- dans lequel au moins un paramètre d'état (QoS) et au moins un paramètre de connexion sont déterminés (401),
- dans lequel avec l'utilisation du paramètre d'état et du paramètre de connexion, on détermine pour chaque mécanisme de correction d'erreur à partir d'un ensemble de mécanismes de correction d'erreur au moins un paramètre de sélection avec lequel on décrit une propriété du mécanisme de correction d'erreur respectif en ce qui concerne le paramètre d'état ou le paramètre de connexion déterminé (441)
- dans lequel un mécanisme de correction d'erreur (AFK, $K_i$) est sélectionné (AUS, 416) et
- dans lequel les segments de données utiles sont codés avec l'utilisation du mécanisme de correction d'erreur sélectionné (CE, 410, 419).

4. Procédé selon la revendication 1 ou 3,
dans lequel au moins deux paramètres d'état (NDS, QoS) sont déterminés et pris en compte.

5. Procédé selon l'une quelconque des revendications 2 et 4,
dans lequel au moins deux paramètres de connexion ($b_A$, $w_b$, $t_a$, $w_t$, $e_A$, $w_e$, QoS, NDS...) sont déterminés et pris en compte.

6. Procédé selon l'une quelconque des revendications 1 à 5,
dans lequel au moins deux paramètres de sélection ($res_b \cdot w_b$, $res \cdot w_t$, $res_e \cdot w_e$) sont déterminés et pris en compte.

7. Procédé selon l'une quelconque des revendications 1 à 6,
dans lequel l'ensemble de mécanismes de correction d'erreur présente au moins l'un des mécanismes de correction d'erreur (AFK, $K_{1\cdots m}$) suivants :

- transmission multiple des segments de données utiles,
- Automatic Repeat Request
- correction d'erreur,
- mécanisme hybride Automatic Repeat Request/correction d'erreur.

8. Procédé selon l'une quelconque des revendications 1 à 7,

- dans lequel l'au moins un paramètre d'état comprend au moins l'un des paramètres suivants :

- une indication de longueur (Len) des données numériques, ou
- une grandeur de paquet de données (Len), qui est obtenue à partir de la somme de la longueur du segment de données utiles et de la longueur d'une information de contrôle (h), qui est ajoutée au segment de données utiles.

9. Procédé selon l'une quelconque des revendications 2 à 8,
dans lequel l'au moins un paramètre de connexion comprend au moins un taux de perte de paquets de données ($e_f$).

10. Procédé selon l'une quelconque des revendications 1 à 9,
dans lequel l'au moins un paramètre de sélection comprend au moins l'un des paramètres suivants :

- un nombre moyen de paquets de données qui est nécessaire pour la transmission des données numériques ($p_{med}$),
- un nombre maximum ($p_{max}$) de paquets de données qui est nécessaire pour la transmission des données numériques, ou
- un taux d'erreur sur les bits ($e_b$).

**11.** Procédé selon l'une quelconque des revendications 1 à 10,

- dans lequel l'au moins un paramètre de sélection est pondéré ($w_b$, $w_t$, $w_e$) .

**12.** Procédé selon l'une quelconque des revendications 1 à 11, utilisé pour la transmission sans fil (419) de données numériques (DS) .

**13.** Dispositif ($A_1$, $A_2$) pour le codage de données numériques (DS), qui sont segmentées en segments de données utiles (NDS), avec l'utilisation d'un mécanisme de correction d'erreur (AFK/$K_i$) sélectionné à partir d'un ensemble prédéfinissable de mécanismes de correction d'erreur (AFK/$K_{1...m}$),

- sur lequel une unité de détermination est prévue pour la détermination d'au moins un paramètre d'état (QoS),
- sur lequel, pour chaque mécanisme de correction d'erreur (AFK/$K_{1...m}$), il est prévu un module de correction ($K_{1...m}$) avec lequel on détermine avec l'utilisation du paramètre d'état (QoS) respectivement au moins un paramètre de sélection ($p_{med}$, $p_{max}$, $e_b$...) avec lequel on décrit une propriété du mécanisme de correction d'erreur ($K_{1...m}$) respectif en ce qui concerne le paramètre d'état déterminé,
- sur lequel il est prévu une unité de sélection de mécanisme (AUS) avec lequel on sélectionne un mécanisme de correction d'erreur (AFK/$K_i$),
- sur lequel il est prévue une unité de codage (CE) pour le codage des segments de données utiles (NDS) avec l'utilisation du mécanisme de correction d'erreur (AFK/$K_i$) sélectionné.

**14.** Dispositif ($A_1$, $A_2$) pour le codage de données numériques (DS), qui sont segmentées en segments de données utiles (NDS), avec l'utilisation d'un mécanisme de correction d'erreur (AFK/$K_{1...m}$) sélectionné à partir d'un ensemble prédéfinissable de mécanismes de correction d'erreur,

- sur lequel une unité de détermination (AFK) est prévue pour la détermination d'au moins un paramètre de connexion,
- sur lequel, pour chaque mécanisme de correction d'erreur (AFK), il est prévu un module de correction ($K_{1...m}$), avec lequel on détermine, avec l'utilisation du paramètre de connexion, respectivement au moins un paramètre de sélection avec lequel on décrit une propriété du mécanisme de correction d'erreur respectif en ce qui concerne le paramètre de connexion déterminé,
- sur lequel il est prévu une unité de sélection de mécanisme (AUS) avec laquelle on choisit un mécanisme de correction d'erreur,
- sur lequel il est prévu une unité de codage (CE) pour le codage des segments de données utiles avec l'utilisation du mécanisme de correction d'erreur sélectionné.

**15.** Dispositif ($A_1$, $A_2$) pour le codage de données numériques (DS), qui sont segmentées en segments de données utiles (NDS), avec l'utilisation d'un mécanisme de correction d'erreur (AFK) sélectionné à partir d'un ensemble prédéfinissable de mécanismes de correction d'erreur (AFK),

- sur lequel une unité de détermination (AFK) est prévue pour la détermination d'au moins un paramètre d'état et d'au moins un paramètre de connexion,
- sur lequel, pour chaque mécanisme de correction d'erreur (AFK), il est prévu un module de correction ($K_{1...m}$) avec lequel, en utilisant le paramètre d'état et le paramètre de connexion, on détermine à chaque fois au moins un paramètre de sélection ($p_{med}$, $p_{max}$, $e_b$) avec lequel on décrit une propriété du mécanisme de correction d'erreur (AFK) respectif en ce qui concerne le paramètre d'état déterminé et le paramètre de connexion,
- sur lequel il est prévu une unité de sélection de mécanisme (AUS), avec lequel on choisit un mécanisme de correction d'erreur,
- sur lequel une unité de codage (CE) est prévue pour le codage des segments de données utiles avec l'utilisation du mécanisme de correction d'erreur sélectionné.

**16.** Dispositif selon la revendication 13 ou 15,
sur lequel l'unité de détermination (AFK) est aménagée de telle sorte qu'au moins deux paramètres d'état sont déterminés et pris en compte.

**17.** Dispositif selon la revendication 14 ou 15,
sur lequel l'unité de détermination (AFK) est aménagée de telle sorte qu'au moins deux éléments de connexion sont déterminés et pris en compte.

**18.** Dispositif selon l'une quelconque des revendications 13 à 17,
sur lequel l'unité de sélection de mécanisme (AUS) est aménagée de telle sorte qu'au moins deux paramètres de sélection sont déterminés et pris en compte.

**19.** Dispositif selon l'une quelconque des revendications 13 à 18,
sur lequel I' ensemble de mécanismes de correction d'erreur (AFK) présente au moins l'un des mécanismes de correction d'erreur suivants :

- transmission multiple des segments de données utiles,
- Automatic Repeat Request
- correction d'erreur,
- mécanisme hybride Automatic Repeat Request/correction d'erreur.

**20.** Dispositif selon l'une quelconque des revendications 13 à 19,
sur lequel au moins un paramètre d'état comprend au moins l'un des paramètres suivants :

- une indication de longueur (Len) des données numériques, ou
- une grandeur de paquets de données (Len), qui est obtenue à partir de la somme de la longueur du segment de données utiles (NDS) et de la longueur d'une information de contrôle (SI), qui est ajoutée au segment de données utiles.

**21.** Dispositif selon l'une quelconque des revendications 14 à 20,
sur lequel l'au moins un paramètre de connexion comprend au moins un taux de perte de paquets de données ($e_f$).

**22.** Dispositif selon l'une quelconque des revendications 13 à 21,

- sur lequel l'au moins un paramètre de sélection comprend au moins l'un des paramètres suivants :

- un nombre moyen ($p_{med}$) de paquets de données qui est nécessaire pour la transmission des données numériques ($p_{med}$),
- un nombre maximum ($p_{max}$) de paquets de données qui est nécessaire pour la transmission des données numériques, ou
- un taux d'erreur sur les bits ($e_b$).

**23.** Dispositif selon l'une quelconque des revendications 13 à 22,
sur lequel l'unité de sélection de mécanisme (AUS) est aménagée de telle sorte que l'au moins un paramètre de sélection est pondéré.

**24.** Système de communication sans fil avec au moins un dispositif (A1, A2) selon l'une quelconque des revendications 1 à 12.

FIG 1

A1

| AN1 | AN2 | ··· | ANi | ··· | ANn |

NDS,QoS   NDS,QoS   NDS,QoS   NDS,QoS

AFK

CE / DE

A2

| AN1 | AN2 | ··· | ANi | ··· | ANn |

NDS,QoS   NDS,QoS   NDS,QoS   NDS,QoS

AFK

CE / DE

DS

DP

| SI | NDS |

DP

| SI | NDS |

UE

EP 0 993 712 B1

## FIG 2

## FIG 3

# FIG 4 A

```
┌─────────────────────────┐
│  QoS entgegennehmen     │──── 401
└─────────────────────────┘
              │
              ▼
┌─────────────────────────┐
│  Fehlerrate abfragen    │──── 402
└─────────────────────────┘
              │
              ▼
┌─────────────────────────┐
│  Verfahren abfragen     │
│  und Tabellen aufstellen│──── 403
└─────────────────────────┘
              │
              ▼
           ╱╲  404
          ╱    ╲
     ╱ exist. Verf.,  ╲     nein
    ╱ das bei allen 100% ╲ ──────────────────────►
     ╲   erfüllt ?    ╱
          ╲        ╱
           ╲  ╱
          ja │
              ▼
           ╱╲  405
          ╱    ╲         nein
         ╱ mehr als eins?╲────────────┐
          ╲            ╱               ▼
           ╲        ╱            ┌──────────────┐ 406
          ja │                  │ wähle dieses │
              ▼                  └──────────────┘
┌─────────────────────────┐
│  wähle das Verfahren    │
│  mit geringster Bandbreite│──── 407
└─────────────────────────┘
              │
              ▼
┌─────────────────────────┐
408 ──│  Kanäle reservieren     │
└─────────────────────────┘
              │
              ▼
           ╱╲
          ╱    ╲          nein
     ╱  Reservierung  ╲ ──────────┐
409 ──│   möglich ?    │
          ╲        ╱
           ╲  ╱
          ja │
              ▼
┌─────────────────────────┐
410 ──│   Übertragungen       │
└─────────────────────────┘
```

# FIG 4 B

Untersuche einzelne
QoS-Parameter auf 100% — 441

Streiche jedes Verfahren, das
100% nicht erfüllen kann — 412

Tabelle leer ? — 413

nein

ja

Dienst ablehnen — 414

mathemat. Auswertung
aus Gewicht. und Effekt. — 415

wähle bestes Verfahren — 416

Kanäle reservieren — 417

418

Reservierung
möglich ?

nein

ja

420

Streiche Verfahren aus Tabelle

Übertragungen

419

421

Tabelle leer ?

nein

ja

Dienst ablehnen — 422